# EUROPÄISCHE PATENTSCHRIFT

(11) **EP 4 271 929 B1**
(45) Veröffentlichungstag und Bekanntmachung des Hinweises auf die Patenterteilung: **29.01.2025**
(21) Anmeldenummer: 21721443.6
(22) Anmeldetag: 21.04.2021
(51) Int. Cl.: F16L 37/113, F16L 23/04, F16L 25/00, F16L 37/098, F16L 37/127, F16L 37/23, F16L 37/252

(54) **VERBINDUNGSVORRICHTUNG ZUM VERBINDEN EINES ERSTEN LEITUNGSENDES MIT EINEM ZWEITEN LEITUNGSENDE**
CONNECTING DEVICE FOR CONNECTING A FIRST LINE END TO A SECOND LINE END
DISPOSITIF DE RACCORDEMENT POUR RACCORDER UNE PREMIÈRE EXTRÉMITÉ DE CONDUITE À UNE SECONDE EXTRÉMITÉ DE CONDUITE

(30) Priorität: 10.03.2021 DE 102021105817
(43) Veröffentlichungstag der Anmeldung: 08.11.2023
(73) Patentinhaber: FLECOTEC AG, 79410 Badenweiler (DE)
(72) Erfinder: KOCH, Martin, 79395 Neuenburg (DE)
(74) Vertreter: Bartels und Partner, Patentanwälte
(86) Internationale Anmeldenummer: PCT/EP2021/060365
(87) Internationale Veröffentlichungsnummer: WO 2022/189002

(56) Entgegenhaltungen:
- DE-A1- 19 838 588
- FR-A1- 2 895 057
- US-A1- 2005 121 912
- US-B1- 7 284 731

## Beschreibung

Die vorliegende Erfindung betrifft eine Verbindungsvorrichtung zum Verbinden eines ersten Leitungsendes mit einem zweiten Leitungsende gemäß der Merkmalsausgestaltung des Oberbegriffes des Patentanspruches 1.

Zum Verbinden von Leitungsenden, beispielsweise von Schlauch- oder Leitungsenden untereinander oder miteinander, sind sogenannte Triclamps als standardisierte Anschlussklemmen (DE 198 38 588 A1, US 7 284 731 B1) bekannt. Unter einem Triclamp versteht man eine klappbare Anschlussklemme oder Anschlussklammer mit zwei axial beabstandeten Klemmflanschen, die leicht angeschrägt zueinander ausgerichtet sind, so dass sich zwischen ihnen ein sich nach radial innen weitender, keilförmiger Ringraum bildet. Ein solcher Triclamp eignet sich zur aseptischen Montage zweier Leitungsenden, die jeweils endständig angeordnete, flanschartige radiale Erweiterungen, auch Anlageflansche genannt, aufweisen und einander mit ihren jeweiligen Stirnflächen kontaktieren. Die Anschlussklemme wird so um die aneinander anliegenden radialen Erweiterungen geklappt, dass die Klemmflansche die jeweiligen Rückflächen der radialen Erweiterungen kontaktieren. Die zum Zusammenklappen der Anschlussklemme eingesetzte Kraft wird über die Schrägen der Klemmflansche in eine Axialkraft umgelenkt, die als Anpresskraft auf die aneinander anliegenden Stirnflächen der radialen Erweiterungen wirkt. Um die Anschlussklemme in zusammengeklapptem Zustand zu halten, sind deren freie Enden miteinander verbindbar. Üblicherweise werden hierzu Schraubverbindungen verwendet. In der US 8 328 457 B2 und in der DE 10 2016 108 905 A1 sind hierzu Rastverbindungen vorgesehen. Des Weiteren ist es durch US 2005/121912 A1 bekannt, medienführende Rohrenden mittels eines Bajonettverschlusses in wieder lösbarer Weise miteinander zu koppeln.

Nachteilig an den Triclamps ist, dass sie sich vergleichsweise schwer schließen und wieder öffnen lassen. Insbesondere dann, wenn ein Triclamp von einer einzigen Person geschlossen oder geöffnet werden soll, ist der hierzu notwendige Zeitaufwand besonders groß. Der erhöhte Zeitaufwand ist insbesondere dann von Nachteil, wenn die Leitungen, welche mit einem Triclamp miteinander verbunden werden, häufig gereinigt werden müssen, wozu der Triclamp geöffnet werden muss.

Wenn die Leitungen, die mit einem Triclamp miteinander verbunden werden, zum Transportieren von toxischen Substanzen, insbesondere in Partikelform, verwendet werden, muss gewährleistet sein, dass keine oder nur sehr kleine Mengen dieser toxischen Substanzen in die Umwelt gelangen können. Hierzu werden sogenannte Sekundärschnittstellen eingesetzt, mit denen schlauchförmige Umhüllungen üblicherweise aus einer Plastikfolie, miteinander verbunden werden und mit welchen die Triclamps umschlossen werden. In diesem Fall muss man jedoch die Triclamps im geschlossenen Zustand der Sekundärschnittstellen öffnen und schließen, was die Handhabung zusätzlich erschwert und den Zeitaufwand weiter ansteigen lässt.

Durch FR 2 895 057 A1 ist eine Verbindungsvorrichtung und ein zugehöriges Verfahren zum Verbinden eines ersten Leitungsendes mit einem zweiten Leitungsende bekannt, wobei
- das erste Leitungsende
   o eine flanschartige radiale erste Erweiterung mit einer ersten Stirnfläche und einer ersten Rückfläche oder
- das zweite Leitungsende
   o eine Mehrzahl von flanschartigen radialen zweiten Erweiterungen mit jeweils einer zweiten Stirnfläche und einer zweiten Rückfläche aufweist, wobei die zweiten Erweiterungen mit Unterbrechungsabschnitten voneinander getrennt sind, und die Verbindungsvorrichtung
- einen Verbindungsring mit
   ∘ einer ersten Verschlussfläche und
   ∘ einer Mehrzahl von zweiten Verschlussflächen umfasst, wobei die Mehrzahl von zweiten Verschlussflächen mit Durchtrittsabschnitten voneinander getrennt sind, wobei
- die erste Verschlussfläche mit der ersten Ringfläche zur Anlage gebracht werden kann, und
- die zweiten Verschlussflächen mit den zweiten Rückflächen dadurch zur Anlage gebracht werden können, dass die zweiten Erweiterungen mit einer axialen Bewegung durch die Durchtrittsabschnitte geführt und anschließend eine Relativdrehbewegung zwischen dem Verbindungsring und dem ersten Leitungsende und/oder eine Relativdrehbewegung zwischen dem Verbindungsring und dem zweiten Leitungsende durchgeführt wird.

Aufgabe der vorliegenden Erfindung ist es daher, eine Verbindungsvorrichtung zum Verbinden eines ersten Leitungsendes mit einem zweiten Leitungsende vorzuschlagen, mit welchem es mit einfachen und kostengünstigen Mitteln möglich ist, ein erstes Leitungsende und ein zweites Leitungsende im Vergleich zu einem Triclamp auf einfachere und schnellere Art und Weise miteinander zu verbinden und wieder voneinander zu lösen.

Diese Aufgabe wird mit den in Anspruch 1 angegebenen Merkmalen gelöst. Vorteilhafte Ausführungsformen sind Gegenstand der Unteransprüche.

Die Erfindung betrifft nach dem Oberbegriff des Patentanspruches 1 eine Verbindungsvorrichtung zum Verbinden eines ersten Leitungsendes mit einem zweiten Leitungsende, wobei
- das erste Leitungsende
   o eine flanschartige radiale erste Erweiterung mit einer ersten Stirnfläche und einer ersten Rückfläche, oder
   o eine Mehrzahl von flanschartigen radialen ersten Erweiterungen mit jeweils einer ersten Stirnfläche und einer ersten Rückfläche aufweist, wobei die ersten Erweiterungen mit Unterbrechungsabschnitten voneinander getrennt sind, und
- das zweite Leitungsende eine Mehrzahl von flanschartigen radialen zweiten Erweiterungen mit jeweils einer zweiten Stirnfläche und einer zweiten Rückfläche aufweist, wobei die zweiten Erweiterungen mit Unterbrechungsabschnitten voneinander getrennt sind, und die Verbindungsvorrichtung
- einen Verbindungsring mit einer radial umlaufenden ersten Verschlussfläche und einer Mehrzahl von zweiten Verschlussflächen umfasst, welche mit Durchtrittsabschnitten voneinander getrennt sind, wobei
- die erste Verschlussfläche mit der ersten Rückfläche oder die ersten Verschlussflächen mit den ersten Rückflächen zur Anlage gebracht werden können, und
- die zweiten Verschlussflächen mit den zweiten Rückflächen dadurch zur Anlage gebracht werden können, dass die zweiten Erweiterungen mit einer axialen Bewegung durch die Durchtrittsabschnitte geführt und anschließend eine Relativdrehbewegung zwischen dem Verbindungsring und dem ersten Leitungsende und/oder eine Relativdrehbewegung zwischen dem Verbindungsring und dem zweiten Leitungsende durchgeführtwird.

Gemäß dem kennzeichnenden Teil des Patentanspruches 1 ist vorgesehen, dass die erste Rückfläche und die zweite Rückfläche gegenüber der ersten Stirnfläche bzw. der zweiten Stirnfläche geneigt sind, dass das erste Leitungsende und das zweite Leitungsende als ein Standard-Triclamp-Stutzen ausgebildet sind und eine erste Schrägfläche bzw. eine zweite Schrägfläche umfassen, dass ein Dichtelement mit dem ersten Leitungsende oder dem zweiten Leitungsende befestigt ist, und dass der Verbindungsring komplementär zu dem Standard-Triclamp-Stutzen ausgebildet ist.

Aufgrund der Neigung der zweiten Verschlussflächen und der zweiten Rückflächen wird beim Drehen des zweiten Leitungsendes seine Drehbewegung auch in eine axiale Bewegung umgesetzt, so dass das zweite Leitungsende auf das erste Leitungsende zubewegt wird, wodurch ein gewisser Anpressdruck zwischen den beiden Leitungsendes bereitgestellt wird und diese dichtend miteinander verbunden werden können.

Der Verschlussring ist an der ersten Verschlussfläche so gestaltet, dass er mit der ersten Rückfläche großflächig zur Anlage gebracht werden kann, während der Verschlussring eine Anzahl von zweiten Verschlussflächen aufweist, um eine bajonettartige Verbindung mit den zweiten Erweiterungen des zweiten Leitungsendes bereitzustellen. In dieser Ausbildung der Verbindungsvorrichtung kann die erste Erweiterung normgerecht nach Art eines Anlageflansches ausgestaltet sein, wie sie bei der Verwendung von handelsüblichen Triclamps benötigt wird, während das zweite Leitungsende bajonettartig ausgestaltet ist. Zum Verbinden und Lösen der beiden Leitungsenden sind folglich nur eine axiale Bewegung entlang der vom ersten Leitungsende definierten Längsachse gefolgt von einer rotatorischen Bewegung um die Längsachse notwendig, so dass das Verbinden und das Lösen auf sehr einfache und schnelle Weise erfolgen können.

Es soll an dieser Stelle angemerkt werden, dass zwei Leitungsenden auch dann mittels der Verbindungsvorrichtung gemäß der vorliegenden Ausbildung miteinander verbunden werden können, wenn das erste Leitungsende eine Mehrzahl von flanschartigen radialen Erweiterungen aufweist, die mittels Unterbrechungsabschnitten voneinander getrennt sind. Insofern ist die vorliegende Verbindungsvorrichtung flexibel einsetzbar.

Zudem kann der Verbindungsring entweder eine durchgehende erste Verschlussfläche oder eine Mehrzahl von ersten Verschlussflächen aufweisen. Im letzteren Fall sind die ersten Verschlussflächen mit Durchtrittsabschnitten voneinander getrennt. Der Verschlussring kann dann symmetrisch aufgebaut sein.

Bei einer weiteren Ausbildung kann vorgesehen sein, dass der Verbindungsring von zwei oder mehreren Ringsegmenten gebildet wird. Für den Fall, dass zwei Ringsegmente vorgesehen werden, können diese als Halbringsegmente und damit baugleich ausgeführt werden. Auch dann, wenn mehr als zwei Ringsegmente vorgesehen sind, können diese baugleich ausgestaltet sein. Die Verwendung von Ringsegmenten bietet sich insbesondere dann an, wenn die beiden zu verbindenden Leitungsenden jeweils fest mit anderen Bauteilen, beispielsweise Behältern oder Anschlüssen, verbunden sind. Infolgedessen ist kein freies Ende vorhanden, über welches der Verbindungsring auf die mit dem ersten Leitungsende verbundene Leitung geschoben werden könnte. In der zweiteiligen oder mehrteiligen Ausführungsform des Verbindungsrings ist es jedoch möglich, diesen um die betreffende erste Leitung herum anzuordnen. In dieser Ausbildung ist es auch möglich, zwei Leitungsenden miteinander zu verbinden, welche unterbrechungsfreie radiale Erweiterungen aufweisen. Allerdings ist dann die Verbindung nicht nach Art eines Bajonettverschlusses möglich.

Eine fortentwickelte Ausbildung kann vorgeben, dass die Ringsegmente mittels eines Kabelbinders miteinander verbindbar sind. Kabelbinder stellen einen Massenartikel dar, die kostengünstig zu beziehen sind. Zudem sind Kabelbinder sehr einfach zu bedienen und zuverlässig in ihrer Funktion. Alternativ können die Ringsegmente mit einer Clipsverbindung oder Schnappverbindung miteinander verbunden werden.

Eine weitere Ausbildung gibt vor, dass der Verbindungsring aus einem thermoplastischen Kunststoff gefertigt ist. Als thermoplastische Kunststoffe kommen insbesondere Nylon oder Polyethylen (PE) in Frage. Üblicherweise ist das erste Leitungsende fest mit einem Behälter, insbesondere einem Reaktor, verbunden und somit das Material des ersten Leitungsendes festgelegt. Das zweite Leitungsende hingegen ist häufig mit einem flexiblen Gebinde oder einem Sack verbunden, in welchen Substanzen transportiert und gelagert werden, die im Reaktor umgesetzt werden. Zum Überführen der Substanzen in den Reaktor werden die beiden Leitungsenden miteinander verbunden. Bei den flexiblen Gebinden und den Säcken stellt sich nach Entleerung die Frage der Entsorgung. Es hat sich herausgestellt, dass eine Verbrennung insbesondere bei toxischen Substanzen die sicherste Methode der Entsorgung ist. Für den Fall, dass die oben genannten Thermoplasten verwendet werden, ist eine weitgehend rückstandsfreie Verbrennung möglich. Folglich bietet es sich an, den Verbindungsring aus den oben genannten Thermoplasten herzustellen.

Darüber hinaus ist es aufgrund der vergleichsweise einfachen geometrischen Form des Verbindungsrings möglich, diese im Spritzgussverfahren herzustellen, so dass hohe Stückzahlen zu geringen Kosten bereitgestellt werden können.

Gemäß einer weiteren Ausbildung kann der Verbindungsring komplementär zu einem Standard-Triclamp-Stutzen ausgebildet sein. Standard-Tri-clamp-Stutzen sind beispielsweise in der ISO 2852 1993-06 (herausgegeben im Juni 1993, inzwischen zurückgezogen) oder der DIN 32676 in der zum Prioritätsdatum gültigen Fassung genormt. Unter einer komplementären Ausbildung zu diesen Standard-Triclamp-Stutzen soll verstanden werden, dass der Verbindungsring hierzu passend ausgestaltet ist und abschnittsweise eine "Negativform" zu den Standard-Triclamp-Stutzen aufweist. Die Standard-Triclamp-Stutzen werden insbesondere in biotechnologischen und pharmazeutischen Anwendungen häufig eingesetzt. In dieser Ausbildung kann die Verbindungsvorrichtung für eine hohe Zahl an Leitungsenden verwendet werden.

Bei einer weiteren Ausbildung kann vorgesehen sein, dass die Verbindungsvorrichtung eine Sekundärschnittstelle umfasst, welche den Verbindungsring radial beabstandet umschließt. Mit einer Sekundärschnittstelle können schlauchförmige Umhüllungen miteinander verbunden werden, mit denen die beiden Leitungsenden umschlossen werden können. Hierdurch wird die Wahrscheinlichkeit, dass insbesondere toxische Substanzen in die Umwelt gelangen, deutlich reduziert.

Eine Ausgestaltung der vorliegenden Erfindung betrifft ein Verfahren zum Verbinden eines ersten Leitungsendes mit einem zweiten Leitungsende mittels einer Verbindungsvorrichtung der erfindungsgemäßen Lösung nach Patentanspruch 1, umfassend die folgenden Schritte:
- zur Anlage bringen der ersten Verschlussfläche des Verbindungsrings mit der ersten Rückfläche der ersten Erweiterung des ersten Leitungsendes;
- Durchführen der zweiten Erweiterungen des zweiten Leitungsendes durch die Durchtrittsabschnitte; und
- zur Anlage bringen der zweiten Verschlussflächen des Verbindungsrings mit den zweiten Rückflächen der zweiten Erweiterungen des zweiten Leitungsendes durch eine Relativdrehbewegung zwischen dem Verbindungsring und dem ersten Leitungsende und/oder durch eine Relativdrehbewegung zwischen dem Verbindungsring und dem zweiten Leitungsende.

Eine weitere Ausgestaltung dieses Verfahrens dient zum Verbinden eines ersten Leitungsendes mit einem zweiten Leitungsende mittels einer Verbindungsvorrichtung, umfassend die folgenden Schritte:
- Durchführen der ersten Erweiterungen des ersten Leitungsendes durch die Durchtrittsabschnitte des Verbindungsrings;
- zur Anlage bringen der ersten Verschlussflächen des Verbindungsrings mit den ersten Rückflächen der ersten Erweiterungen des ersten Leitungsendes durch eine Relativdrehbewegung zwischen dem Verbindungsring und dem ersten Leitungsende;
- Durchführen der zweiten Erweiterungen des zweiten Leitungsendes durch die Durchtrittsabschnitte des Verbindungsrings; und
- zur Anlage bringen der zweiten Verschlussflächen des Verbindungsrings mit den zweiten Rückflächen der zweiten Erweiterungen des zweiten Leitungsendes durch eine Relativdrehbewegung zwischen dem Verbindungsring und dem zweiten Leitungsende.

Die Vorteile und die technischen Effekte, die für die Verbindungsvorrichtung beschrieben worden sind, lassen sich gleichermaßen mit den beiden Verfahren erzielen. Hervorzuheben ist, dass sich das erste Leitungsende und das zweite Leitungsende auf schnelle und einfache Weise miteinander verbinden lassen. Insbesondere dann, wenn eine Sekundärschnittstelle verwendet wird, lassen sich die beiden Leitungsenden verbinden und wieder voneinander lösen, ohne dass die Sekundärschnittstelle geöffnet werden muss, wobei die Gefahr, dass die Sekundärschnittstelle oder die hiermit verbundenen schlauchförmigen Umhüllungen hierbei beschädigt werden, gering ist.

Der Verbindungsring ist ein vergleichsweise einfach ausgestaltetes Bauteil, welches sich entsprechend kostengünstig herstellen lässt.

Eine Realisierung der vorliegenden Erfindung betrifft eine Verbindungsanordnung zum Verbinden eines ersten Leitungsendes mit einem zweiten Leitungsende mittels einer Verbindungsvorrichtung nach dem Patentanspruch 1, umfassend
- ein erstes Leitungsende und ein zweites Leitungsende; und
- einen Verbindungsring,
wobei das erste Leitungsende und das zweite Leitungsende mit dem Verbindungsring miteinander verbindbar oder verbunden sind.

Die Vorteile und die technischen Effekte, die für die Verbindungsvorrichtung beschrieben worden sind, lassen sich gleichermaßen mit der Verbindungsanordnung erzielen.

In einer weitergebildeten Realisierung können das erste Leitungsende und/oder das zweite Leitungsende aus einem thermoplastischen Kunststoff gefertigt sein.

Wie bereits erwähnt, hat die Verwendung eines plastischen Kunststoffes Vorteile beim Entsorgen des Verbindungsrings. Dieselben Vorteile ergeben sich insbesondere auch bei dem Leitungsende, welches mit den flexiblen Gebinden oder den Säcken verbunden sind. Daher bietet es sich an, das zweite Leitungsende und den Verbindungsring aus demselben Thermoplast zu fertigen, aus dem auch das flexible Gebinde oder der Sack gefertigt ist. Zudem können das flexible Gebinde oder der Sack durch Schweißen mit dem zweiten Leitungsende verbunden werden.

Eine fortgebildete Realisierung kann sich dadurch auszeichnen, dass das erste Leitungsende und/oder das zweite Leitungsende als ein Standard-Triclamp-Stutzen ausgebildet sind. Wie erwähnt, werden die Standard-Triclamp-Stutzen insbesondere in biotechnologischen und pharmazeutischen Anwendungen häufig eingesetzt. In dieser Ausbildung kann die Verbindungsvorrichtung für eine hohe Zahl an Leitungsenden verwendet werden. Es soll an dieser Stelle erwähnt werden, dass auch Ausführungen des ersten Leitungsendes und des zweiten Leitungsendes als Standard-Triclamp-Stutzen aufgefasst werden sollen, wenn diese eine Mehrzahl von ersten Erweiterungen bzw. zweiten Erweiterungen aufweisen, die von Unterbrechungsabschnitten voneinander getrennt sind, sofern sie im Übrigen beispielsweise den Normen ISO 2852 oder DIN 31676 entsprechen.

Eine Umsetzung der vorliegenden Erfindung betrifft die Verwendung der Verbindungsvorrichtung nach einem der zuvor beschriebenen Ausführungsformen und Ausbildungen bei der Herstellung und beim Transport von biotechnologischen und pharmazeutischen Produkten. Die Vorteile und die technischen Effekte, die für die Verbindungsvorrichtung beschrieben worden sind, lassen sich gleichermaßen mit der Verwendung erzielen. Insbesondere dann, wenn die Verbindungsvorrichtung mit einer Sekundärschnittstelle betrieben wird, eignet sich die Verbindungsvorrichtung auch für die Verbindung von Leitungsenden, durch welche toxische Substanzen durchgeleitet werden. In vielen Fällen handelt es sich dabei um partikelförmige Substanzen, wobei die Substanzen auch im flüssigen oder gasförmigen Zustand durch die Leitungsenden geführt werden können.

Eine weitergebildete Umsetzung besteht darin, dass die Verbindungsvorrichtung als Single-Use oder batchweise verwendet und danach entsorgt wird. Bei einem Single-Use wird zumindest der Verbindungsring nach einem einmaligen Verbinden und Lösen entsorgt, während bei einer batchweisen Verwendung mehrere zweite Leitungsenden mit demselben ersten Leitungsende verbunden werden. Eine batchweise Verwendung liegt beispielsweise dann vor, wenn ein Reaktor mit einer Menge einer Substanz gefüllt werden soll, welche nicht mit einem einzigen Sack zur Verfügung gestellt werden kann, sondern mehrere Säcke entleert werden müssen. Folglich werden mehrere zweite Leitungsenden, die mit jeweils einem Sack verbunden sind, in denen die Substanz gelagert und transportiert wird, unter Verwendung des Verbindungsrings mit dem ersten Leitungsende verbunden. Sobald die benötigte Menge der Substanz in den Reaktor überführt worden ist, wird der Verbindungsring entsorgt.

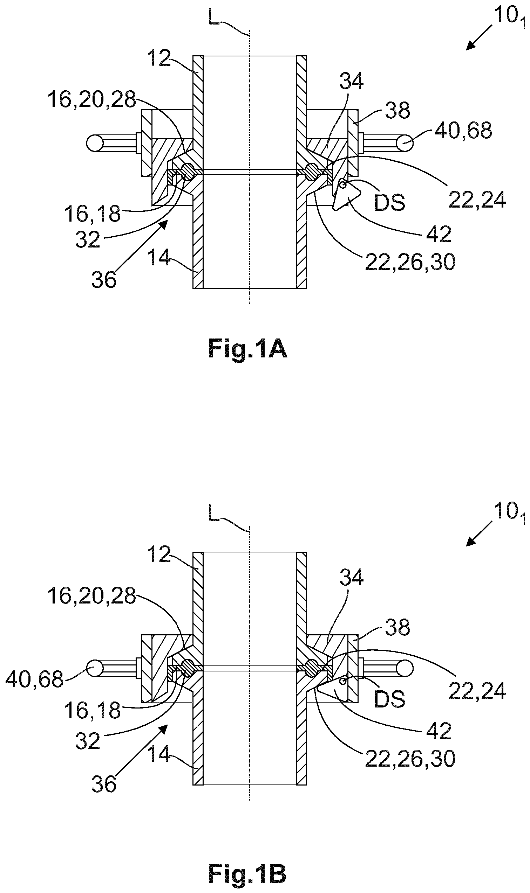

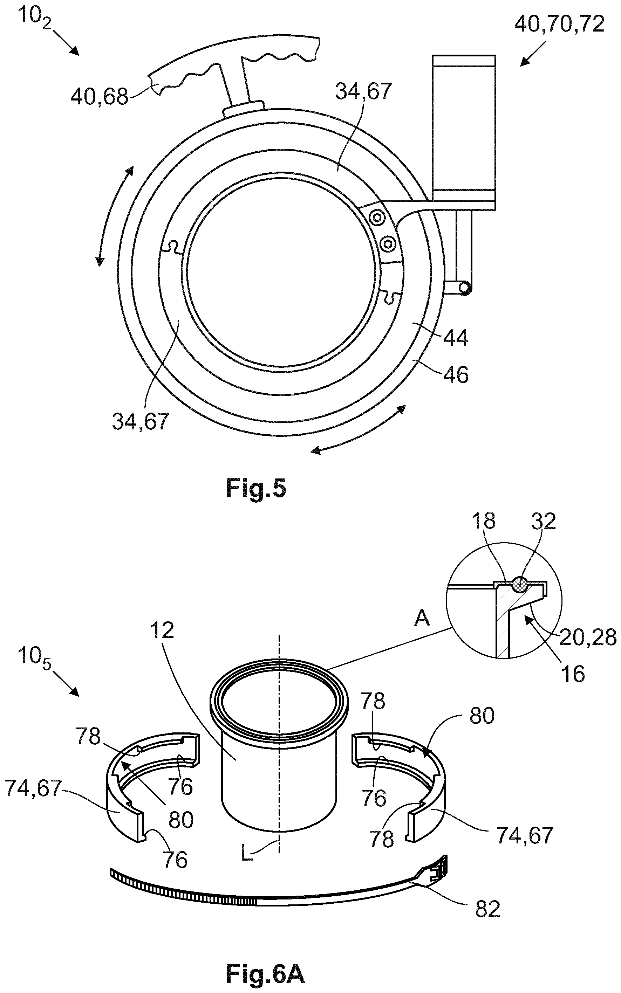

Beispielhafte Ausführungsformen der Erfindung werden im Folgenden unter Bezugnahme auf die beigefügten Zeichnungen näher erläutert, wobei die Lösungen nach den Fig. 1A bis 5 nicht Gegenstand der Erfindung nach den vorliegenden Patentansprüchen sind und insoweit nur ergänzend der technischen Erläuterung der erfindungsgemäßen Vorrichtung nach den Fig. 6A bis 6G dienen. Es zeigen:
- Fig. 1A: ein erstes Ausführungsbeispiel einer Verbindungsvorrichtung zum Verbinden eines ersten Leitungsendes mit einem zweiten Leitungsende, wobei die Leitungsenden vorpositioniert sind;
- Fig. 1B: das in Fig. 1A dargestellte erste Ausführungsbeispiel der Verbindungsvorrichtung, bei welchem die Leitungsenden miteinander verbunden sind;
- Fig. 2A: ein zweites Ausführungsbeispiel der Verbindungsvorrichtung zum Verbinden eines ersten Leitungsendes mit einem zweiten Leitungsende;
- Fig. 2B: das in Fig. 2A dargestellte zweite Ausführungsbeispiel der Verbindungsvorrichtung, bei welchem die Leitungsenden vorpositioniert sind;
- Fig. 2C: das in Fig. 2A dargestellte zweite Ausführungsbeispiel der Verbindungsvorrichtung, bei welchem die Leitungsenden miteinander verbunden sind, jeweils anhand von prinzipiellen Schnittdarstellungen;
- Fig. 3A: ein drittes Ausführungsbeispiel der Verbindungsvorrichtung zum Verbinden eines ersten Leitungsendes mit einem zweiten Leitungsende, bei welchem die Leitungsenden vorpositioniert sind;
- Fig. 3B: das in Fig. 3A dargestellte dritte Ausführungsbeispiel, bei welchem die Leitungsenden miteinander verbunden sind;
- Fig. 4A: ein viertes Ausführungsbeispiel der Verbindungsvorrichtung zum Verbinden eines ersten Leitungsendes mit einem zweiten Leitungsende, bei welchem die Leitungsenden vorpositioniert sind;
- Fig. 4B: das in Fig. 3A dargestellte vierte Ausführungsbeispiel, bei welchem die Leitungsenden miteinander verbunden sind;
- Fig. 5: eine prinzipielle Draufsicht auf das zweite Ausführungsbeispiel der Verbindungsvorrichtung;
- Fig. 6A: ein erstes Leitungsende und ein erfindungsgemäßes Ausführungsbeispiel der Verbindungsvorrichtung in einem Ausgangszustand;
- Fig. 6B: das in Fig. 6A gezeigte dritte Ausführungsbeispiel in einem Zwischenzustand, in welchem die Verbindungsvorrichtung mit dem ersten Leitungsende verbunden ist;
- Fig. 6C: ein zweites Leitungsende, welches mit der Verbindungsvorrichtung nach dem erfindungsgemäßen Ausführungsbeispiel mit einem ersten Leitungsende verbindbar ist;
- Fig. 6D: das in Fig. 6C gezeigte zweite Leitungsende, welches mit der Verbindungsvorrichtung nach dem erfindungsgemäßen Ausführungsbeispiel mit einem ersten Leitungsende verbunden ist;
- Fig. 6E: ein weiteres zweites Leitungsende, welches mit der Verbindungsvorrichtung nach dem erfindungsgemäßen Ausführungsbeispiel mit einem ersten Leitungsende verbindbar ist;
- Fig. 6F: das in Fig. 6E gezeigte weitere zweite Leitungsende, welches mit der Verbindungsvorrichtung nach dem erfindungsgemäßen Ausführungsbeispiel mit einem ersten Leitungsende verbunden ist; und
- Fig. 6G: das in Fig. 6D gezeigte zweite Leitungsende, welches mit der Verbindungsvorrichtung nach dem erfindungsgemäßen Ausführungsbeispiel mit einem ersten Leitungsende verbunden ist, wobei die Verbindungsvorrichtung von einer Sekundärschnittstelle umschlossen ist.

In Fig. 1A ist ein erstes Ausführungsbeispiel einer Verbindungsvorrichtung 10₁ zum Verbinden eines ersten Leitungsendes 12 mit einem zweiten Leitungsende 14 anhand einer prinzipiellen Schnittdarstellung gezeigt. Das erste Leitungsende 12 kann beispielsweise das Ende einer Rohrleitung oder eines Schlauches sein. Entsprechendes gilt für das zweite Leitungsende 14. Die Rohrleitungen oder die Schläuche können mit einem Behälter oder einem Anschluss, beispielsweise einem Versorgungsanschluss, verbunden sein (nicht dargestellt).

Das erste Leitungsende 12 weist eine flanschartige radiale erste Erweiterung 16 mit einer ersten Stirnfläche 18 und einer ersten Rückfläche 20 auf. Das zweite Leitungsende 14 ist entsprechend aufgebaut und umfasst folglich eine flanschartige radiale zweite Erweiterung 22 mit einer zweiten Stirnfläche 24 und einer zweiten Rückfläche 26. Man erkennt, dass die erste Rückfläche 20 und die zweite Rückfläche 26 gegenüber der ersten Stirnfläche 18 bzw. zweiten Stirnfläche 24 geneigt sind, so dass das erste Leitungsende 12 eine erste Schrägfläche 28 und das zweite Leitungsende 14 eine zweite Schrägfläche 30 umfassen. Zudem ist erkennbar, dass ein Dichtelement 32 in diesem Fall mit dem zweiten Leitungsende 14 befestigt ist, wobei eine Befestigung am ersten Leitungsende 12 ebenfalls möglich ist. Das erste Leitungsende 12 und das zweite Leitungsende 14 sind so ausgestaltet, dass sie mit einem handelsüblichen Triclamp miteinander verbunden werden können.

Die Verbindungsvorrichtung 10₁ weist einen Auflagering 34 auf, welcher mit der ersten Rückfläche 20 zur Anlage gebracht werden kann. Dabei kann der Auflagering 34 nach Art eines Spannsatzes ausgebildet sein, so dass der Auflagering 34 axial und verdrehsicher am ersten Leitungsende 12 fixiert werden kann. Wie erwähnt, ist die erste Rückfläche 20 als die erste Schrägfläche 28 ausgestaltet, so dass der Auflagering 34 ebenfalls eine zur ersten Schrägfläche 28 korrespondierend ausgerichtete Anlagefläche aufweist. Zudem ist aus der Fig. 1A erkennbar, dass der Auflagering 34 radial nach außen über die erste Erweiterung 16 und die zweite Erweiterung 22 übersteht. Zudem steht der Auflagering 34 über die erste Stirnfläche 18 über, wenn der Auflagering 34 mit der ersten Rückfläche 20 zur Anlage gebracht ist. Aufgrund dieser Ausgestaltung bildet der Auflagering 34 eine Aufnahmeöffnung 36, in welche das zweite Leitungsende 14 mit ihrer zweiten Erweiterung 22 einbringbar ist, wie es in Fig. 1A dargestellt ist. Dabei definieren das erste Leitungsende 12 und das zweite Leitungsende 14 eine Längsachse L, zu welcher der Auflagering 34 konzentrisch angeordnet ist.

Weiterhin umfasst die Verbindungsvorrichtung 10₁ eine Sperreinrichtung 38, die im ersten Ausführungsbeispiel ringförmig ausgestaltet ist und ein Innengewinde aufweist. Die Sperreinrichtung 38 kann folglich auf den Auflagering 34 aufgeschraubt und koaxial zur Längsachse L positioniert werden, wobei der Auflagering 34 ein entsprechend ausgebildetes Außengewinde aufweist, wobei das Innengewinde und das Außengewinde in der Fig. 1A nicht näher dargestellt sind. Zum Drehen der Sperreinrichtung 38 weist diese ein Griffstück 40 auf, welches nach Art eines Handrads 68 ausgebildet ist. Ein Benutzer kann folglich die Sperreinrichtung 38 auf einfache Weise drehen und somit auf den Auflagering 34 aufschrauben.

Weiterhin ist ein Sperrkörper 42 vorgesehen, der im ersten Ausführungsbeispiel am Auflagering 34 befestigt ist. Der Sperrkörper 42 ist derart am Auflagering 34 befestigt, dass er um eine senkrecht zur Längsachse L verlaufende Drehachse DS drehbar ist, wobei der Sperrkörper 42 im Bereich der Aufnahmeöffnung 36 am Auflagering 34 befestigt ist und somit von der ersten Rückfläche 20 aus gesehen vor der ersten Stirnfläche 18 angeordnet ist. Die Drehachse DS verläuft exzentrisch durch den Sperrkörper 42, der im ersten Ausführungsbeispiel bezogen auf die von Fig. 1A definierten Darstellungsebene in etwa einen dreieckigen Querschnitt aufweist. Der Sperrkörper 42 ist so gelagert, dass er je nach Stellung der Sperreinrichtung 38 mit derselben zusammen wirken kann. In Fig. 1A befindet sich die Sperreinrichtung 38 in einer Offenstellung, in welcher sie nicht mit dem Sperrkörper 42 zusammenwirkt. Folglich lässt sich der Sperrkörper 42 weitgehend unbeschränkt um seine Drehachse DS drehen. Infolgedessen lässt sich das zweite Leitungsende 14 in die Aufnahmeöffnung 36 einbringen, ohne dass der Sperrkörper 42 hierbei stört.

Das zweite Leitungsende 14 wird dabei so weit in die Aufnahmeöffnung 36 eingebracht, dass die erste Stirnfläche 18 mit dem Dichtelement 32 in Kontakt kommt. Der Auflagering positioniert das zweite Leitungsende 14 insoweit vor, als dass es axial fluchtend zur Längsachse L des ersten Leitungsendes 12 ausgerichtet ist. Anschließend wird die Sperreinrichtung 38 um die Längsachse L gedreht, wodurch sie eine axiale Bewegung entlang der Längsachse L ausführt, welche bezogen auf die Fig. 1A nach unten gerichtet ist. Dabei kommt ab einer gewissen Position die Sperreinrichtung 38 mit dem Sperrkörper 42 in Kontakt und dreht dabei den Sperrkörper 42 wiederum bezogen auf die in Fig. 1A gewählte Darstellung im Uhrzeigersinn um seine Drehachse DS. Aufgrund seiner exzentrischen Lagerung kommt ein Teil des Sperrkörpers mit der zweiten Rückfläche 26 in Kontakt und bringt eine Schließkraft auf die zweite Rückfläche 26 auf, welche zumindest anteilig entlang der Längsachse L und zur ersten Stirnfläche 18 hin gerichtet ist. Infolgedessen wird das zweite Leitungsende 14 gegen die erste Stirnfläche 18 des ersten Leitungsendes 12 gedrückt, wodurch das Dichtelement 32 gestaucht wird. Der Sperrkörper 42 befindet sich nun in einer Schließstellung. Das erste Leitungsende 12 und das zweite Leitungsende 14 sind nun dichtend miteinander verbunden, wie es in Fig. 1B dargestellt ist, so dass Fluide, partikelförmige Festkörper oder dergleichen vom ersten Leitungsende 12 in das zweite Leitungsende 14 und umgekehrt befördert werden können.

Zum Lösen des zweiten Leitungsendes 14 vom ersten Leitungsende 12 wird die Sperreinrichtung 38 in eine Position gebracht, dass diese nicht mehr mit dem Sperrkörper 42 zusammenwirkt, beispielsweise in die in Fig. 1A gezeigte Position.

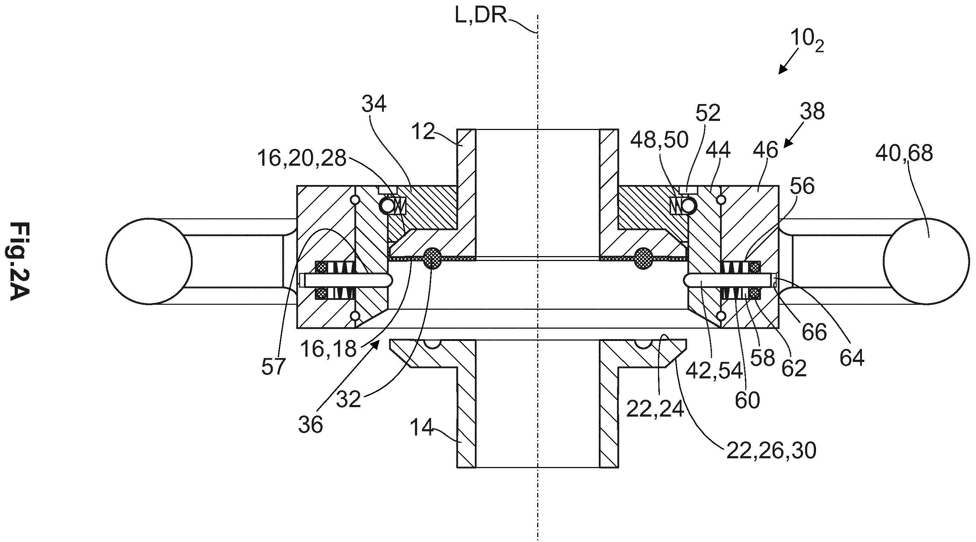

In den Fig. 2A bis 2C ist ein zweites Ausführungsbeispiel der Verbindungsvorrichtung 10₂ ebenfalls anhand von prinzipiellen Schnittdarstellungen gezeigt. Dabei sind das erste Leitungsende 12 und das zweite Leitungsende 14 im Wesentlichen genauso aufgebaut wie für das in den Fig. 1A und 1B gezeigte Ausführungsbeispiel beschrieben, so dass auf die diesbezügliche Beschreibung verwiesen werden kann. Auch in diesem Fall umfasst die Verbindungsvorrichtung 10₂ den bereits erwähnten Auflagering 34, der mit der ersten Rückfläche 20 des ersten Leitungsendes 12 in Anlage gebracht werden kann, wie auch in Fig. 2A dargestellt. Allerdings steht der Auflagering 34 in radialer Richtung in nur sehr geringem Maß über die erste Erweiterung 16 über. Zudem umfasst die Sperreinrichtung 38 in diesem Fall einen ersten Ring 44 und einen zweiten Ring 46. Der zweite Ring 46 ist um den ersten Ring 44 um eine Drehachse DR drehbar an demselben befestigt, ohne dass dabei der zweite Ring 46 axial bewegt werden kann. Die Drehachse DR fällt mit der Längsachse L des ersten Leitungsendes zusammen. Der erste Ring 44 ist lösbar mit dem Auflagering 34 verbindbar. Hierzu ist eine Rastverbindung 48 mit entsprechend ausgebildeten Rastmitteln 50 vorgesehen, so dass der erste Ring 44 nur auf den Auflagering 34 aufgeschoben werden muss, bis dass die Rastmittel 50 eine formschlüssige Verbindung zwischen dem ersten Ring 44 und dem Auflagering 34 herstellen. Weiterhin ist eine Verdrehsicherung 52 vorgesehen, mit welcher sichergestellt wird, dass sich der erste Ring 44 nicht um den Auflagering 34 drehen kann. Der erste Ring 44 und der zweite Ring 46 sind konzentrisch zur Längsachse L angeordnet.

Der bereits erwähnte Sperrkörper 42 ist in diesem Fall in der Sperreinrichtung 38 gelagert und als ein Sperrstift 54 ausgebildet. Der Sperrstift 54 ist axial verschiebbar in einer Sacklochbohrung 56 des zweiten Rings 46 gelagert und durchläuft eine Bohrung 57 des ersten Rings 44. Der Sperrstift 54 umfasst einen Kragen 58, an welchem sich ein erstes Vorspannmittel 60 und ein zweites Vorspannmittel 62 abstützen. Das erste Vorspannmittel 60 stützt sich weiterhin am ersten Ring 44 ab, während sich das zweite Vorspannmittel 62 an dem Grund der Sacklochbohrung 56 abstützt. Während das erste Vorspannmittel 60 als eine Feder ausgeführt ist, ist das zweite Vorspannmittel 62 als ein elastischer O-Ring realisiert.

Weiterhin ragt der Sperrstift 54 in eine Nut 64 hinein, die sich um ein gewisses Maß in Umfangsrichtung des zweiten Rings 46 erstreckt und an ihrem Nutgrund eine Stellfläche 66 bildet. Der Abstand der Stellfläche 66 zur Längsachse L ändert sich in Umfangsrichtung der Nut 64.

Das erste Vorspannmittel 60 ist so ausgebildet, dass sie den Sperrstift 54 zur Stellfläche 66 hin vorspannt, während das zweite Vorspannmittel 62 den Sperrstift 54 radial nach innen vorgespannt.

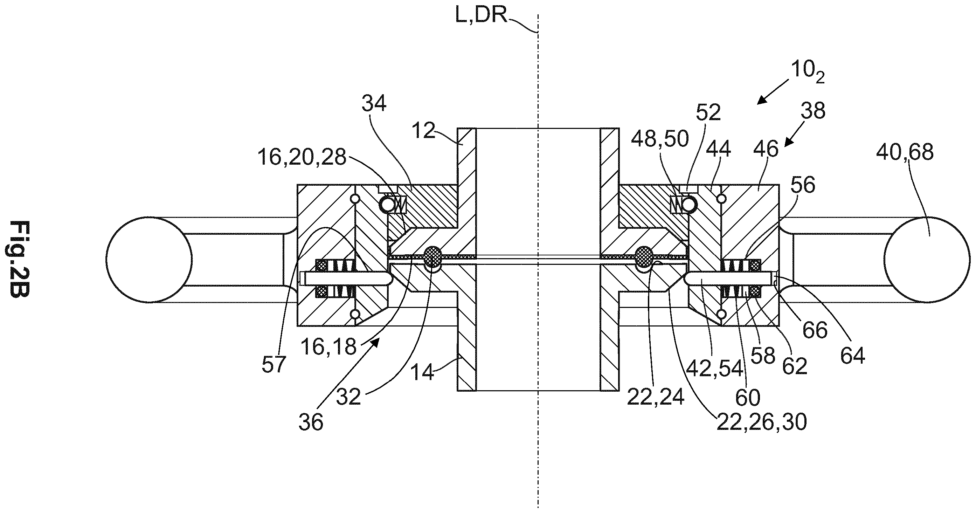

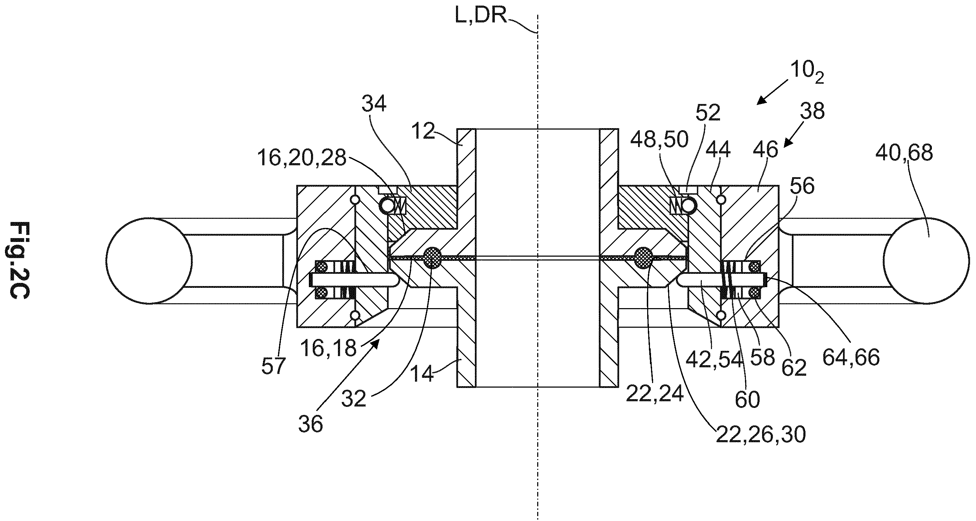

In Fig. 2A befindet sich die Verbindungsvorrichtung 10₂ in einer Ausgangsstellung. In dieser Ausgangsstellung ist das zweite Leitungsende 14 noch nicht in die Aufnahmeöffnung 36, die in diesem Fall vom ersten Ring 44 gebildet wird, eingebracht. Der Sperrstift 54 berührt in diesem Fall noch nicht die Stellfläche 66 und kann daher noch um ein gewisses Maß radial nach außen bewegt werden. In Fig. 2B ist das zweite Leitungsende 14 in die Aufnahmeöffnung 36 eingebracht, wobei der Sperrstift 54 an der zweiten Schrägfläche 30 anliegt. Beim Einbringen des zweiten Leitungsendes 14 in die Aufnahmeöffnung 36 kommt die zweite Erweiterung 22 in Kontakt mit dem Sperrstift 54 und bewegt diesen so weit radial nach außen, dass der Sperrstift 54 die axiale Bewegung des zweiten Leitungsendes 14 nicht blockiert. Dabei werden die zweiten Vorspannmittel 62 komprimiert, wodurch eine radial nach innen gerichtete Rückstellkraft erzeugt wird. Sobald das zweite Leitungsende 14 so weit zum ersten Leitungsende 12 hin bewegt worden ist, dass der Durchmesser der zweiten Erweiterung 22 im Bereich der zweiten Schrägfläche 30 abnimmt, wird der Sperrstift 54 aufgrund der Rückstellkraft der zweiten Vorspannmittel 62 wieder radial nach innen verschoben, wobei der Sperrstift 54 mit der zweiten Schrägfläche 30 in Kontakt treten kann. In der in Fig. 2B gezeigten Stellung wird infolgedessen das zweite Leitungsende 14 vom Sperrstift 54 in der dort gezeigten Stellung gehalten, allerdings liegt das zweite Leitungsende 14 noch nicht vollflächig an dem Dichtelement 32 an, so dass noch keine abdichtenden Verbindung zwischen dem ersten Leitungsende 12 und dem zweiten Leitungsende 14 vorliegt. Allerdings kann die betreffende Person ihre Hand von dem zweiten Leitungsende 14 nehmen und das Griffstück 40 zum Drehen des zweiten Rings 46 ergreifen. Wie erwähnt, ändert sich der Abstand der Stellfläche 66 zur Längsachse L in Umfangsrichtung der Nut 64. Der zweite Ring 46 wird nun so gedreht, dass sich der Abstand der Stellfläche 66 zur Längsachse L im Bereich des Sperrstifts 54 verringert. Folglich tritt der Sperrstift 54 ab einer gewissen Drehstellung des zweiten Rings 46 mit der Stellfläche 66 in Kontakt. Je weiter der zweite Ring 46 gedreht wird, desto weiter wird der Sperrstift 54 radial nach innen bewegt und gegen die zweite Schrägfläche 30 gedrückt. Hierbei überträgt der Sperrstift 54 anteilig eine entlang der Längsachse L gerichtete Kraft auf die zweite Schrägfläche 30, infolgedessen das zweite Leitungsende 14 zur ersten Stirnfläche 18 des ersten Leitungsendes 12 hin verschoben wird. Dabei tritt die zweite Stirnfläche 24 mit dem Dichtelement 32 in dichtenden Kontakt, so dass das erste Leitungsende 12 und das zweite Leitungsende 14 dichtend miteinander verbunden sind. Der Sperrstift 54 befindet sich nun in der Schließstellung (siehe Fig. 2C).

Aufgrund der radial nach innen gerichteten Bewegung des Sperrstifts 54 werden die ersten Vorspannmittel 60 komprimiert, welche infolgedessen eine radial nach außen gerichtete Rückstellkraft ausüben. Aufgrund des Kontakts des Sperrstifts 54 mit der Stellfläche 66 verbleibt der Sperrstift 54 in der in Fig. 2C dargestellten Position, so dass das zweite Leitungsende 14 nicht mehr relativ zum ersten Leitungsende 12 axial verschoben werden kann.

Um das zweite Leitungsende 14 vom ersten Leitungsende 12 wieder zu lösen, wird der zweite Ring 46 in die entgegengesetzte Richtung gedreht. Aufgrund der von den ersten Vorspannmitteln 60 erzeugten Rückstellkraft ist sichergestellt, dass der Sperrstift 54 auch beim Drehen des zweiten Rings 46 gegen die Stellfläche 66 gedrückt wird. Da sich der Abstand der Stellfläche 66 von der Längsachse L in diesem Fall vergrößert, bewegt sich der Sperrstift 54 radial nach außen. Infolgedessen wird das zweite Leitungsende 14 freigegeben und kann vom ersten Leitungsende 12 gelöst werden.

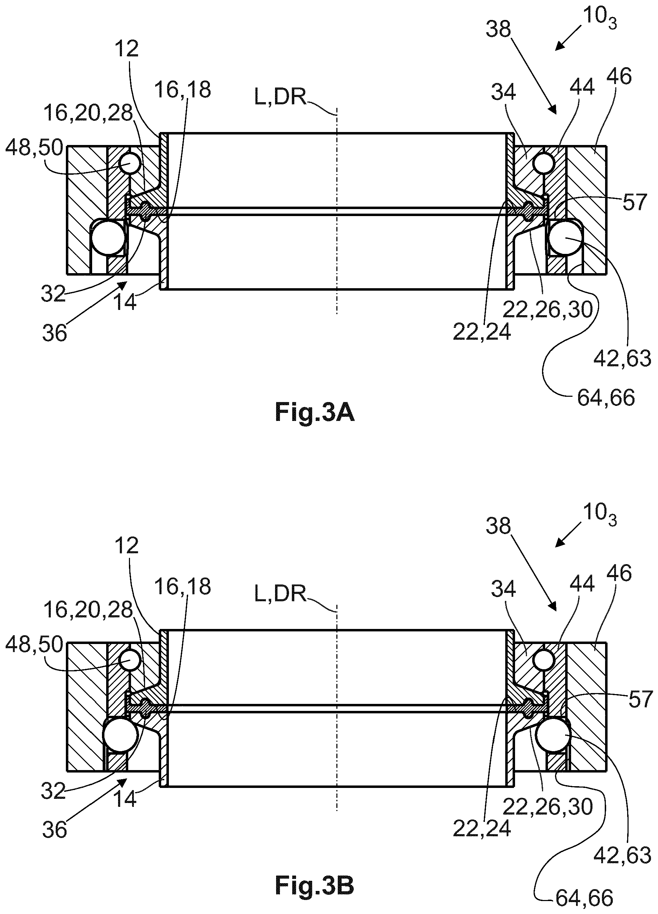

In den Fig. 3A und 3B ist ein drittes Ausführungsbeispiel der Verbindungsvorrichtung 10₃ anhand einer Schnittdarstellung gezeigt, wobei in Fig. 3A das zweite Leitungsende 14 vorpositioniert ist, während in Fig. 3B das erste Leitungsende 12 und das zweite Leitungsende 14 miteinander verbunden sind. Die Verbindungsvorrichtung 10s nach dem dritten Ausführungsbeispiel ist ähnlich wie die Verbindungsvorrichtung 10₂ nach dem zweiten Ausführungsbeispiel aufgebaut, so dass im Folgenden nur auf die wesentlichen Unterschiede eingegangen wird. Der Sperrkörper 42 ist als eine Sperrkugel 63 ausgeführt, welche wie der Sperrstift 54 des zweiten Ausführungsbeispiels der Verbindungsvorrichtung 10₂ in einer Bohrung 57 des ersten Rings 44 gelagert ist. Auch in diesem Ausführungsbeispiel weist der zweite Ring 46 die bereits erwähnte Nut 64 auf, an deren Nutgrund die Stellfläche 66 gebildet wird. Der Abstand der Stellfläche 66 zur Drehachse DR des zweiten Rings 46 ändert sich in Umfangsrichtung der Nut 64. Die Sperrkugel 63 liegt an der Stellfläche 66 an. Wird der zweite Ring 46 gedreht, wird die Sperrkugel 63 radial nach innen bewegt und gegen die zweite Schrägfläche 30 gedrückt. Hierbei überträgt die Sperrkugel 63 anteilig eine entlang der Längsachse L gerichtete Kraft auf die zweite Schrägfläche 30, infolgedessen das zweite Leitungsende 14 zur ersten Stirnfläche 18 des ersten Leitungsendes 12 hin verschoben wird. Dabei tritt die zweite Stirnfläche 24 mit dem Dichtelement 32 in dichtenden Kontakt, so dass das erste Leitungsende 12 und das zweite Leitungsende 14 dichtend miteinander verbunden sind. Die Sperrkugel 63 befindet sich nun in der Schließstellung (siehe Fig. 3B).

Zum Lösen des ersten Leitungsendes 12 vom zweiten Leitungsende 14 wird der zweite Ring 46 wieder zurück in die in Fig. 3A dargestellte Stellung gedreht. Wird das zweite Leitungsende 14 vom ersten Leitungsende 12 weg bewegt, wird die Sperrkugel 63 radial nach außen gedrückt und gibt den Weg für das zweite Leitungsende 14 frei, so dass das zweite Leitungsende 14 aus der Aufnahmeöffnung 36 entnommen werden kann.

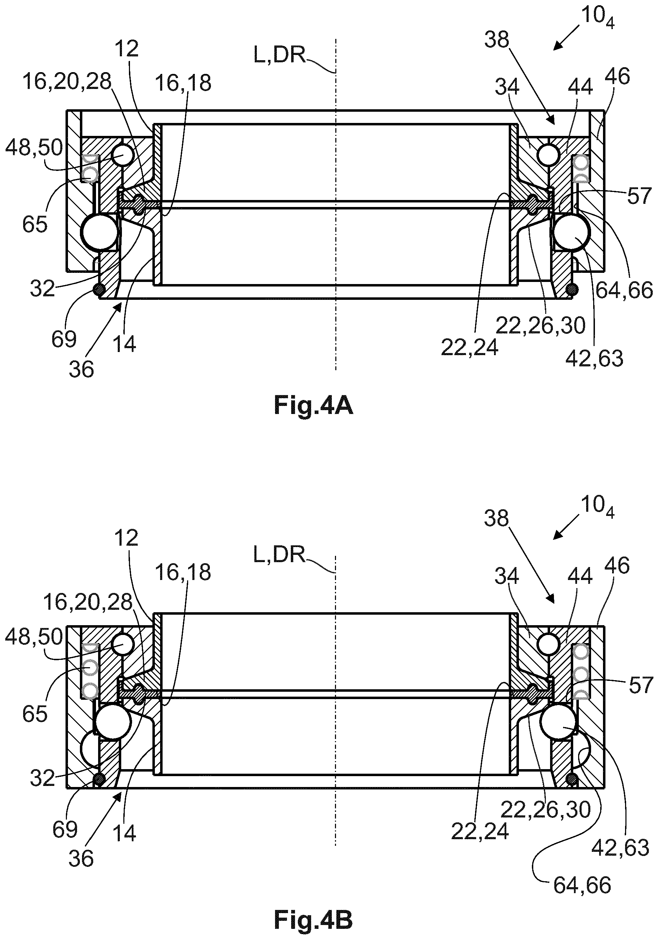

In den Fig. 4A und 4B ist ein viertes Ausführungsbeispiel der Verbindungsvorrichtung 10₄ anhand einer Schnittdarstellung gezeigt, wobei in Fig. 4A das zweite Leitungsende 14 vorpositioniert ist, während in Fig. 4B das erste Leitungsende 12 und das zweite Leitungsende 14 miteinander verbunden sind. Auch in diesem Ausführungsbeispiel ist der Sperrkörper 42 als eine Sperrkugel 63 ausgeführt, die in einer Bohrung 57 des ersten Rings 44 gelagert ist. In diesem Ausführungsbeispiel ist der zweite Ring 46 axial gegenüber dem ersten Ring 44 bewegbar und wird mit einer Feder 65 in die in Fig. 4B gezeigte Stellung vorgespannt. Zum Definieren dieser Position ist ein Stoppelement 69 am ersten Ring 44 vorgesehen, mit welcher die axiale Beweglichkeit des zweiten Rings 46 begrenzt wird. Der zweite Ring 46 ist auch in diesem Ausführungsbeispiel mit der Nut 64 ausgestattet, allerdings ändert sich der Abstand der Stellfläche 66 zur Drehachse DR nicht in Umfangsrichtung, sondern in axialer Richtung. In diesem Fall muss der zweite Ring 46 nicht notwendigerweise drehbar am ersten Ring 44 befestigt sein. Insofern ist der Begriff "Drehachse" DR geometrisch und nicht funktionell zu verstehen. Befindet sich der zweite Ring 46 in der in Fig. 4B gezeigten Stellung, wird die Sperrkugel 63 gegen die zweite Schrägfläche 30 gedrückt, so dass das zweite Leitungsende 14 gegen das erste Leitungsende 12 gedrückt wird. Die Sperrkugel 63 kann radial nach außen nicht ausweichen, so dass das zweite Leitungsende 14 nicht mehr relativ zum ersten Leitungsende 12 axial verschoben werden kann.

Um das zweite Leitungsende 14 vom ersten Leitungsende 12 wieder zu lösen, wird der zweite Ring 46 gegen die Vorspannkraft der Feder 65 in die in Fig. 4A gezeigte Stellung verschoben, in welcher der radiale Abstand der Stellfläche 66 zur Drehachse DR im Bereich der Sperrkugel 63 ansteigt und so groß ist, dass die Sperrkugel 63 radial nach außen so weit ausweichen kann, dass das zweite Leitungsende 14 freigegeben wird und vom ersten Leitungsende 12 gelöst werden kann.

In Fig. 5 ist eine prinzipielle Draufsicht auf das in den Fig. 2A bis 2C dargestellte zweite Ausführungsbeispiel der Verbindungsvorrichtung 10₂ gezeigt. Man erkennt, dass der Auflagering 34 von zwei Ringsegmenten 67 gebildet wird, welche baugleich ausgeführt sind und formschlüssig miteinander verbunden werden können. Wie bereits erwähnt, schließt der Auflagering 34 mehr oder weniger bündig in radialer Richtung mit der ersten Erweiterung 16 ab, so dass der erste Ring 44 auf dem Auflagering 34 aufgeschoben werden kann, ohne dass er dabei gegen die erste Erweiterung 16 anstößt. Infolgedessen kann der erste Ring 44 unabhängig davon, ob das erste Leitungsende 12 Teil einer fest mit einem Bauteil, insbesondere mit einem Behälter, verbundenen Leitung ist, über die erste Erweiterung 16 geschoben werden. Wenn jedoch die mit dem ersten Leitungsende 12 verbundene Leitung fest mit einem Behälter oder dergleichen verbunden ist, ist es nicht möglich, einen einteiligen Auflagering 34 von der ersten Stirnfläche 18 ausgesehen hinter der ersten Erweiterung 16 so anzuordnen, dass der Auflagering 34 mit der ersten Rückfläche 20 zur Anlage gebracht werden kann. Die Verwendung eines zwei- oder mehrteiligen Auflagerings 34 unter Ausbildung der Ringsegmente 67 hingegen ermöglicht diese Anordnung.

Zudem ist in Fig. 5 das Griffstück 40 zu erkennen, welches als ein nur teilweise dargestelltes Handrad 68 ausgebildet ist. Ferner ist am Auflagering 34 eine Antriebseinheit 70 befestigt mit welcher es möglich ist, automatisiert den zweiten Ring 46 um die Längsachse L zu drehen. Im dargestellten Ausführungsbeispiel umfasst die Antriebseinheit 70 eine Kolben-Zylindereinheit 72, welche beispielsweise pneumatisch oder hydraulisch betätigt werden kann.

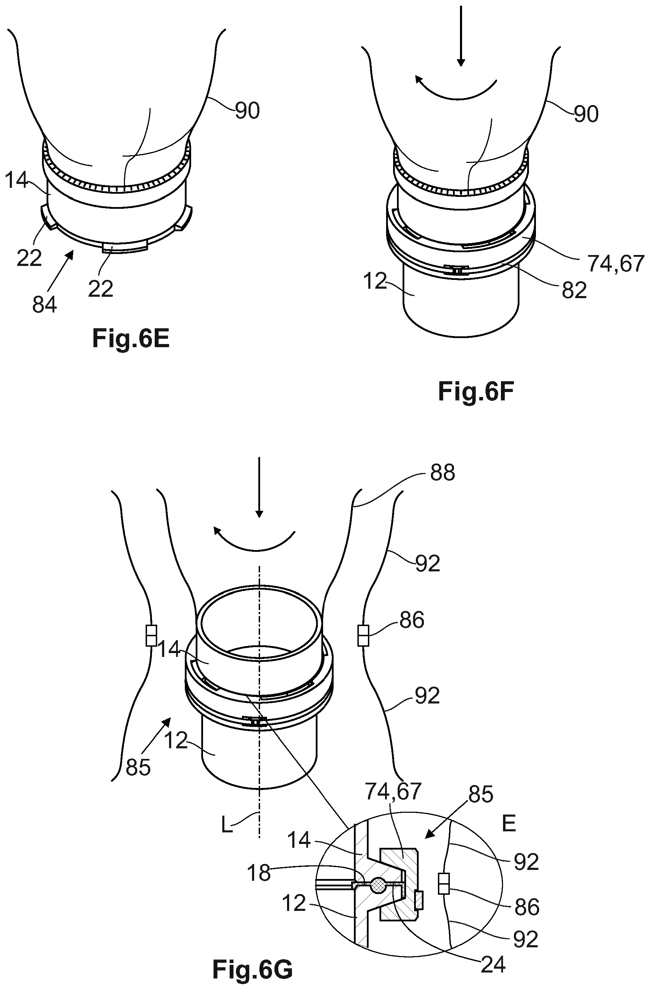

In den Fig. 6A bis 6G ist ein erfindungsgemäßes Ausführungsbeispiel einer vorschlagsgemäßen Verbindungsvorrichtung 10₅ in verschiedenen Zuständen dargestellt, wobei einige der Fig. 6A bis 6G vergrößert dargestellte Ausschnitte A bis E aufweisen. Fig. 6A zeigt die Verbindungsvorrichtung 10₅ in einem Ausgangszustand. Zudem ist ein erstes Leitungsende 12 gezeigt, welches genauso aufgebaut ist wie die zuvor beschriebenen ersten Leitungsenden 12, die mit einem herkömmlichen Triclamp verwendet werden können. Das erste Leitungsende 12 definiert auch in diesem Ausführungsbeispiel eine Längsachse L (vgl. Fig. 6A und 6G). Zudem ist im vergrößert dargestellten Ausschnitt A erkennbar, dass an der ersten Stirnfläche 18 ein Dichtelement 32 mit dem ersten Leitungsende 12 verbunden ist.

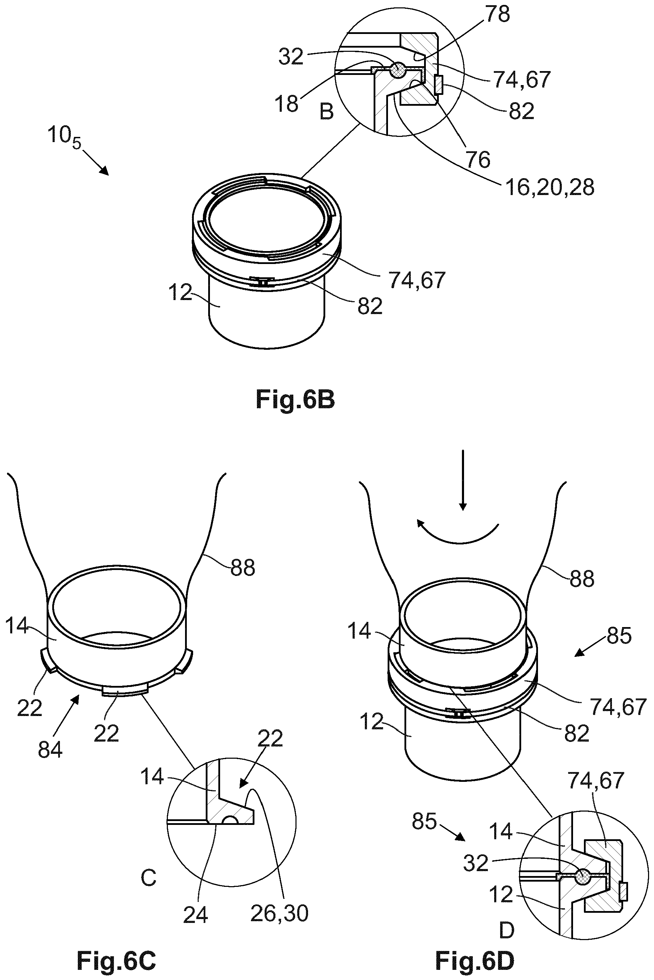

Die Verbindungsvorrichtung 10₅ gemäß diesem Ausführungsbeispiel umfasst einen Verbindungsring 74, der im dargestellten Ausführungsbeispiel von zwei Ringsegmenten 67 gebildet wird, welche mittels eines Kabelbinders 82 miteinander verbunden werden können, wie aus Fig. 6B ersichtlich. Der Verbindungsring 74 weist eine radial unterbrechungsfrei umlaufende erste Verschlussfläche 76 auf, welche korrespondierend zur ersten Schrägfläche 28 der ersten Erweiterung 16 des ersten Leitungsendes 12 ausgebildet ist. Weiterhin umfasst der Verbindungsring 74 eine Anzahl von zweiten Verschlussflächen 78, welche von nach Art einer Ausnehmung ausgestalteten Durchtrittsabschnitten 80 voneinander getrennt sind. Die zweiten Verschlussflächen 78 weisen dieselbe Neigung wie die ersten Verschlussflächen 76 auf, wie insbesondere aus dem vergrößert dargestellten Ausschnitt B der Fig. 6B zu erkennen ist.

In Fig. 6C ist ein zweites Leitungsende 14 gezeigt, welches eine Anzahl von zweiten Erweiterungen 22 aufweist, wobei die zweiten Erweiterungen 22 mit Unterbrechungsabschnitten 84 voneinander getrennt sind, die ebenfalls nach Art einer Ausnehmung ausgestaltet sind. Im Übrigen sind die zweiten Erweiterungen 22 genauso aufgebaut wie die zuvor beschriebenen zweiten Erweiterungen 22.

Das erste Leitungsende 12, das zweite Leitungsende 14 und die Verbindungsvorrichtung 10s bilden zusammen eine Verbindungsanordnung 85. Nicht dargestellt ist eine Ausführungsform der Verbindungsanordnung 85, bei welcher das erste Leitungsende 12 eine Mehrzahl von ersten Erweiterungen 16 aufweist, die von Unterbrechungsabschnitte 84 voneinander getrennt sind. In diese Ausführungsform der Verbindungsanordnung können das erste Leitungsende 12 und das zweite Leitungsende 14 baugleich ausgeführt sein. Der Verbindungsring 74 hingegen kann unverändert bleiben. Allerdings ist es genauso gut möglich, den Verbindungsring 74 mit einer Mehrzahl von ersten Verschlussflächen 76 zu versehen, die mit Durchtrittsabschnitten 80 voneinander getrennt sind (nicht dargestellt). In diesem Fall kann der Verbindungsring 74 symmetrisch zu einer Symmetrieebene aufgebaut sein, die senkrecht zur Längsachse L verläuft.

Zum Verbinden des zweiten Leitungsendes 14 mit dem ersten Leitungsende 12 wird zunächst der Verbindungsring 74 unter Verwendung des Kabelbinders 82 mit dem ersten Leitungsende 12 verbunden, wie es in Fig. 6B dargestellt ist. Anschließend wird das zweite Leitungsende 14 koaxial zum ersten Leitungsende 12 angeordnet, wobei das zweite Leitungsende 14 in eine Drehstellung gebracht wird, in welcher die zweiten Erweiterungen 22 durch die Durchtrittsabschnitte 80 des Verbindungsrings 74 axial durchgeführt werden können. Sobald sich die zweiten Erweiterungen 22 axial gesehen hinter den zweiten Verschlussflächen 78 des Verbindungsrings 74 befinden, werden das zweite Leitungsende 14 und/oder der Verbindungsring 74 um die Längsachse L gedreht, so dass die zweiten Rückflächen 26 der zweiten Erweiterungen 22 mit den zweiten Verschlussflächen 78 des Verbindungsrings 74 zur Anlage gebracht werden können. Das erste Leitungsende 12 und das zweite Leitungsende 14 werden folglich nach Art eines Bajonettverschlusses miteinander verbunden.

Sowohl die zweiten Verschlussflächen 78 als auch die zweiten Rückflächen 26 können dabei in Umfangsrichtung etwas geneigt und daher rampenförmig ausgebildet sein. Dies hat zur Folge, dass beim Drehen des zweiten Leitungsendes 14 dasselbe auch axial zum ersten Leitungsende 12 hin verschoben wird, so dass eine dichtende Anlage der zweiten Stirnfläche 24 am Dichtelement 32 erreicht wird, wie es aus der Fig. 6D hervorgeht. Infolgedessen sind das erste Leitungsende 12 und das zweite Leitungsende 14 dichtend miteinander verbunden.

Aus den Fig. 6C und 6D ist zu entnehmen, dass eine flexible Umhüllung 88 mit dem zweiten Leitungsende 14 verbunden ist. In den Fig. 6E und 6F ist eine anders ausgebildete Umhüllung 90 mit dem zweiten Leitungsende 14 verbunden. Es ist also möglich, ganz unterschiedliche Bauteile unter Verwendung der Verbindungsvorrichtung 10₁ mit dem standardisierten ersten Leitungsende 12 zu verbinden.

Fig. 6G zeigt das in Fig. 6D gezeigte erste Leitungsende 12 und das zweite Leitungsende 14 bzw. die Verbindungsanordnung 85 im verbundenen Zustand, wobei radial außerhalb der Verbindungsvorrichtung 10₅ bzw. der Verbindungsanordnung 85 eine Sekundärschnittstelle 86 angeordnet ist. Die Sekundärschnittstelle 86 verbindet zwei schlauchförmige Schutzhüllen 92, wodurch verhindert werden kann, dass eine Substanz, welche im Bereich der Verbindungsvorrichtung 10₅ aus dem ersten Leitungsende 12 oder dem zweiten Leitungsende 14 entweichen sollte, unkontrolliert in die Umwelt gelangen kann. Die Sekundärschnittstelle 86 sowie die Schutzhüllen 92 können analog auch für die Verbindungsvorrichtungen 10₁ bis 10₄ nach dem ersten Ausführungsbeispiel bis vierten Ausführungsbeispiel verwendet werden.

### Bezugszeichenliste

- 10: Verbindungsvorrichtung
- 10₁ - 10₅: Verbindungsvorrichtung
- 12: erstes Leitungsende
- 14: zweites Leitungsende
- 16: erste Erweiterung
- 18: erste Stirnfläche

- 20: erste Rückfläche
- 22: zweite Erweiterung
- 24: zweite Stirnfläche
- 26: zweite Rückfläche
- 28: erste Schrägfläche

- 30: zweite Schrägfläche
- 32: Dichtelement
- 34: Auflagering
- 36: Aufnahmeöffnung
- 38: Sperreinrichtung

- 40: Griffstück
- 42: Sperrkörper
- 44: erster Ring
- 46: zweiter Ring
- 48: Rastverbindung

- 50: Rastmittel
- 52: Verdrehsicherung
- 54: Sperrstift
- 56: Sacklochbohrung
- 57: Bohrung
- 58: Kragen

- 60: erstes Vorspannmittel
- 62: zweites Vorspannmittel
- 63: Sperrkugel
- 64: Nut
- 65: Feder
- 66: Stellfläche
- 67: Ringsegment
- 68: Handrad
- 69: Stoppelement

- 70: Antriebseinheit
- 72: Kolben-Zylindereinheit
- 74: Verbindungsring
- 76: erste Verschlussfläche
- 78: zweite Verschlussfläche

- 80: Durchtrittsabschnitt
- 82: Kabelbinder
- 84: Unterbrechungsabschnitte
- 85: Verbindungsanordnung
- 86: Sekundärschnittstelle
- 88: flexible Umhüllung

- 90: Umhüllung
- 92: Schutzhülle

- A - E: Ausschnitt
- DS: Drehachse Sperrkörper
- DR: Drehachse zweiter Ring
- L: Längsachse

## Patentansprüche

1. Verbindungsvorrichtung (10) umfassend ein erstes Leitungsende (12), ein zweites Leitungsende (14) und einen Verbindungsring (74), mit dem das erste Leitungsende (12) mit dem zweiten Leitungsende (14) verbindbar ist, wobei
- das erste Leitungsende (12)
o eine flanschartige radiale erste Erweiterung (16) mit einer ersten Stirnfläche (18) und einer ersten Rückfläche (20) oder
o eine Mehrzahl von flanschartigen radialen ersten Erweiterungen (16) mit jeweils einer ersten Stirnfläche (18) und einer ersten Rückfläche (20) aufweist, wobei die ersten Erweiterungen (16) mit Unterbrechungsabschnitten (84) voneinander getrennt sind, und
- das zweite Leitungsende (14) eine Mehrzahl von flanschartigen radialen zweiten Erweiterungen (22) mit jeweils einer zweiten Stirnfläche (24) und einer zweiten Rückfläche (26) aufweist, wobei die zweiten Erweiterungen (22) mit Unterbrechungsabschnitten (84) voneinander getrennt sind, und
wobei der Verbindungsring (74) mit
o einer ersten Verschlussfläche (76) oder einer Mehrzahl von ersten Verschlussflächen (76) und
∘ einer Mehrzahl von zweiten Verschlussflächen (78) ausgestattet ist, wobei die Mehrzahl von ersten Verschlussflächen (76) und die Mehrzahl von zweiten Verschlussflächen (78) mit Durchtrittsabschnitten (80) voneinander getrennt sind, wobei
- die erste Verschlussfläche (76) mit der ersten Rückfläche (20) oder die ersten Verschlussflächen (76) mit den ersten Rückflächen (20) zur Anlage gebracht werden können, und
- die zweiten Verschlussflächen (78) mit den zweiten Rückflächen (26) dadurch zur Anlage gebracht werden können, dass die zweiten Erweiterungen (22) mit einer axialen Bewegung durch die Durchtrittsabschnitte (80) geführt und anschließend eine Relativdrehbewegung zwischen dem Verbindungsring (74) und dem ersten Leitungsende (12) und/oder eine Relativdrehbewegung zwischen dem Verbindungsring (74) und dem zweiten Leitungsende (14) durchgeführtwird, und
wobei ein Dichtelement (32) an dem ersten Leidungsende (12) oder dem zweiten Leitungsende (14) befestigt ist,
**dadurch gekennzeichnet,**
**dass** die erste Rückfläche (20) und die zweite Rückfläche (26) gegenüber der ersten Stirnfläche (18) bzw. der zweiten Stirnfläche (24) geneigt sind,
**dass** das erste Leitungsende (12) und das zweite Leitungsende (14) als ein Standard-Triclamp-Stutzen ausgebildet sind und eine erste Schrägfläche (28) bzw. eine zweite Schrägfläche (30) umfassen, und dass der Verbindungsring (74) komplementär zu den als Standard-Tri-clamp-Stutzen ausgebildeten und miteinander verbundenen Leitungsenden (12, 14) ausgebildet ist.

2. Verbindungsvorrichtung (10) nach Anspruch 1, **dadurch gekennzeichnet, dass** der Verbindungsring (74) von zwei oder mehreren Ringsegmenten (67) gebildet wird.

3. Verbindungsvorrichtung (10) nach Anspruch 2, **dadurch gekennzeichnet, dass** die Ringsegmente (67) mittels eines Kabelbinders (82) miteinander verbindbar sind.

4. Verbindungsvorrichtung (10) nach einem der vorherigen Ansprüche, **dadurch gekennzeichnet, dass** der Verbindungsring (74) aus einem thermoplastischen Kunststoff gefertigt ist.

5. Verbindungsvorrichtung (10) nach einem der vorherigen Ansprüche, **dadurch gekennzeichnet, dass** die Verbindungsvorrichtung (10) eine Sekundärschnittstelle (86) umfasst, welche den Verbindungsring (74) radial beabstandet umschließt.

6. Verfahren zum Verbinden eines ersten Leitungsendes (12) mit einem zweiten Leitungsende (14) mittels einer Verbindungsvorrichtung (10) nach einem der vorherigen Ansprüche, umfassend die folgenden Schritte:
- zur Anlage bringen der ersten Verschlussfläche (76) des Verbindungsrings (74) mit der ersten Rückfläche (20) der ersten Erweiterung (16) des ersten Leitungsendes (12);
- Durchführen der zweiten Erweiterungen (22) des zweiten Leitungsendes (14) durch die Durchtrittsabschnitte (80) des Verbindungsrings (74); und
- zur Anlage bringen der zweiten Verschlussflächen (78) des Verbindungsrings (74) mit den zweiten Rückflächen (26) der zweiten Erweiterungen (22) des zweiten Leitungsendes (14) durch eine Relativdrehbewegung zwischen dem Verbindungsring (74) und dem ersten Leitungsende (12) und/oder durch eine Relativdrehbewegung zwischen dem Verbindungsring (74) und dem zweiten Leitungsende (14).

7. Verfahren zum Verbinden eines ersten Leitungsendes (12) mit einem zweiten Leitungsende (14) mittels einer Verbindungsvorrichtung (10) nach einem der Ansprüche 1 bis 5, umfassend die folgenden Schritte:
- Durchführen der ersten Erweiterungen (16) des ersten Leitungsendes (12) durch die Durchtrittsabschnitte (80) des Verbindungsrings (74);
- zur Anlage bringen der ersten Verschlussflächen (76) des Verbindungsrings (74) mit den ersten Rückflächen (20) der ersten Erweiterungen (16) des ersten Leitungsendes (12) durch eine Relativdrehbewegung zwischen dem Verbindungsring (74) und dem ersten Leitungsende (12);
- Durchführen der zweiten Erweiterungen (22) des zweiten Leitungsendes (14) durch die Durchtrittsabschnitte (80) des Verbindungsrings (74); und
- zur Anlage bringen der zweiten Verschlussflächen (78) des Verbindungsrings (74) mit den zweiten Rückflächen (26) der zweiten Erweiterungen (22) des zweiten Leitungsendes (14) durch eine Relativdrehbewegung zwischen dem Verbindungsring (74) und dem zweiten Leitungsende (14).

8. Verbindungsanordnung (85) mit einer Verbindungsvorrichtung nach einem der Ansprüche 1 bis 5, wobei das erste Leitungsende (12) und das zweite Leitungsende (14) mit dem Verbindungsring (74) miteinander verbunden sind.

9. Verbindungsvorrichtung (10) nach einem der Ansprüche 1 bis 5 oder Verbindungsanordnung (85) nach Anspruch 8, **dadurch gekennzeichnet, dass** das erste Leitungsende (12) und/oder das zweite Leitungsende (14) aus einem thermoplastischen Kunststoff gefertigt sind.

## Claims

1. Connecting device (10) comprising a first line end (12), a second line end (14) and a connecting ring (74), by means of which the first line end (12) can be connected to the second line end (14),
wherein
- the first line end (12) has
∘ a flange-like radial first widening (16) with a first end face (18) and a first rear face (20), or
∘ a plurality of flange-like radial first widenings (16), each with a first end face (18) and a first rear face (20), wherein the first widenings (16) are separated from one another by interruption portions (84), and
- the second line end (14) has a plurality of flange-like radial second widenings (22), each with a second end face (24) and a second rear face (26), wherein the second widenings (22) are separated from one another by interruption portions (84), wherein
- the connecting ring (74) is furnished with
∘ a first closure face (76) or a plurality of first closure faces (76) and
∘ a plurality of second closure faces (78), wherein the plurality of first closure faces (76) and the plurality of second closure faces (78) are separated from one another by passage portions (80), wherein
- the first closure face (76) can be brought into contact with the first rear face (20), or the first closure faces (76) can be brought into contact with the first rear faces (20), and
- the second closure faces (78) can be brought into contact with the second rear faces (26) by virtue of the fact that the second widenings (22) are guided with an axial movement through the passage portions (80) and then a relative rotational movement is carried out between the connecting ring (74) and the first line end (12) and/or a relative rotational movement is carried out between the connecting ring (74) and the second line end (14), wherein a sealing element (32) is attached to the first line end (12) or the second line end (14),
**characterised in that** the first rear face (20) and the second rear face (26) are inclined with respect to the first end face (18) or the second end face (24), **in that** the first line end (12) and the second line end (14) are configured as a standard tri-clamp fitting and comprise a first inclined surface (28) or a second inclined surface (30) respectively, and **in that** the connecting ring (74) is configured to complement the line ends (12, 14) connected to one another and configured as standard tri-clamp fittings.

2. Connecting device (10) according to claim 1, **characterised in that** the connecting ring (74) is formed by two or more ring segments (67).

3. Connecting device (10) according to claim 2, **characterised in that** the ring segments (67) can be connected to one another by means of a cable tie (82).

4. Connecting device (10) according to any of the preceding claims, **characterised in that** the connecting ring (74) is manufactured from a thermoplastics material.

5. Connecting device (10) according to any of the preceding claims, **characterised in that** the connecting device (10) comprises a secondary interface (86), which encloses the connecting ring (74) at a radial distance.

6. Method for connecting a first line end (12) to a second line end (14) using a connecting device (10) according to any of the preceding claims, comprising the following steps:
- bringing the first closure face (76) of the connecting ring (74) into contact with the first rear face (20) of the first widening (16) of the first line end (12);
- passing the second widenings (22) of the second line end (14) through the passage portions (80) of the connecting ring (74); and
- bringing the second closure faces (78) of the connecting ring (74) into contact with the second rear faces (26) of the second widenings (22) of the second line end (14) by a relative rotational movement between the connecting ring (74) and the first line end (12) and/or by a relative rotational movement between the connecting ring (74) and the second line end (14).

7. Method for connecting a first line end (12) to a second line end (14) using a connecting device (10) according to any of claims 1 to 5, comprising the following steps:
- passing the first widenings (16) of the first line end (12) through the passage portions (80) of the connecting ring (74);
- bringing the first closure faces (76) of the connecting ring (74) into contact with the first rear faces (20) of the first widenings (16) of the first line end (12) by a relative rotational movement between the connecting ring (74) and the first line end (12);
- passing the second widenings (22) of the second line end (14) through the passage portions (80) of the connecting ring (74); and
- bringing the second closure faces (78) of the connecting ring (74) into contact with the second rear faces (26) of the second widenings (22) of the second line end (14) by a relative rotational movement between the connecting ring (74) and the second line end (14).

8. Connecting arrangement (85) with a connecting device according to any of claims 1 to 5, wherein the first line end (12) and the second line end (14) are connected to one another by the connecting ring (74).

9. Connecting device (10) according to any of claims 1 to 5 or the connecting arrangement (85) according to claim 8, **characterised in that** the first line end (12) and/or the second line end (14) are manufactured from a thermoplastics material.

## Revendications

1. Dispositif (10) de raccordement comprenant un premier bout (12) de ligne, un deuxième bout (14) de ligne et un anneau (74) de raccordement, par lequel le premier bout (12) de ligne peut être raccordé au deuxième bout (14) de ligne, dans lequel
- le premier bout (12) de ligne a
∘ un premier évasement (16) radial de type à bride ayant une première surface (18) frontale et une première surface (20) arrière ou
∘ une pluralité de premiers évasements (16) radiaux de type à bride ayant chacun une première surface (18) frontale et une première surface (20) arrière, dans lequel les premiers évasements (16) sont séparés les uns des autres par des parties (84) d'interruption, et
- le deuxième bout (14) de ligne a une pluralité de deuxièmes évasements (22) radiaux de type à bride ayant chacun une deuxième surface (24) frontale et une deuxième surface (26) arrière, dans lequel les deuxièmes évasements (22) sont séparés les uns des autres par des parties (84) d'interruption, et
dans lequel l'anneau (74) de raccordement est pourvu
∘ d'une première surface (76) de fermeture ou d'une pluralité de premières surfaces (76) de fermeture et
∘ d'une pluralité de deuxièmes surfaces (78) de fermeture, dans lequel la pluralité de premières surfaces (76) de fermeture et la pluralité de deuxièmes surfaces (78) de fermeture sont séparées les unes des autres par des parties (80) de passage, dans lequel
- la première surface (76) de fermeture peut être mise en application avec la première surface (20) arrière ou les premières surfaces (76) de fermeture avec les premières surfaces (20) arrière, et
- les deuxièmes surfaces (78) de fermeture peuvent être mises en application avec les deuxièmes surfaces (26) arrière, par le fait que les deuxièmes évasements (22) sont guidés avec un déplacement axial dans les parties (80) de passage et ensuite il s'effectue un mouvement de rotation relatif entre l'anneau (74) de raccordement et le premier bout (12) de ligne et/ou un mouvement de rotation relatif entre l'anneau (74) de raccordement et le deuxième bout (14) de ligne, et
dans lequel un élément (32) d'étanchéité est fixé au premier bout (12) de ligne ou au deuxième bout (14) de ligne,
**caractérisé**
**en ce que** la première surface (20) arrière et la deuxième surface (26) arrière sont inclinées par rapport à la première surface (18) frontale et respectivement la deuxième surface (24) frontale,
**en ce que** le premier bout (12) de ligne et le deuxième bout (14) de ligne sont constitués sous la forme d'une tubulure triclamp-standard et comprennent une première surface (28) oblique et respectivement une deuxième surface (30) oblique, et
**en ce que** l'anneau (74) de raccordement est constitué de manière complémentaire aux bouts (12, 14) de ligne constitués de tubulure triclamp-standard et raccordés entre eux.

2. Dispositif (10) de raccordement suivant la revendication 1, **caractérisé en ce que** l'anneau (74) de raccordement est formé de deux ou plusieurs segments (67) annulaires.

3. Dispositif (10) de raccordement suivant la revendication 2, **caractérisé en ce que** les segments (67) annulaires peuvent être raccordés entre eux au moyen d'une liaison (82) par câble.

4. Dispositif (10) de raccordement suivant l'une des revendications précédentes, **caractérisé en ce que** l'anneau (74) de raccordement est fabriqué en une matière plastique thermoplastique.

5. Dispositif (10) de raccordement suivant l'une des revendications précédentes, **caractérisé en ce que** le dispositif (10) de raccordement comprend une interface (86) secondaire, qui entoure à distance radialement l'anneau (74) de raccordement.

6. Procédé de raccordement d'un premier bout (12) de ligne à un deuxième bout (14) de ligne au moyen d'un dispositif (10) de raccordement suivant l'une des revendications précédentes, comprenant les stades suivants :
- mettre en application la première surface (76) de fermeture de l'anneau (74) de raccordement sur la première surface (20) arrière du premier évasement (16) du premier bout (12) de ligne ;
- faire passer les deuxièmes évasements (22) du deuxième bout (14) de ligne dans les parties (80) de passage de l'anneau (74) de raccordement ; et
- mettre en application les deuxièmes surfaces (78) de fermeture de l'anneau (74) de raccordement sur les deuxièmes surfaces (26) arrière des deuxièmes évasements (22) du deuxième bout (14) de ligne par un mouvement de rotation relatif entre l'anneau (74) de raccordement et le premier bout (12) de ligne et/ou par un mouvement de rotation relatif entre l'anneau (74) de raccordement et le deuxième bout (14) de ligne.

7. Procédé de raccordement d'un premier bout (12) de ligne à un deuxième bout (14) de ligne au moyen d'un dispositif (10) de raccordement suivant l'une des revendications 1 à 5, comprenant les stades suivants :
- faire passer les premiers évasements (16) du premier bout (12) de ligne dans les parties (80) de passage de l'anneau (74) de raccordement ;
- mettre en application les premières surfaces (76) de fermeture de l'anneau (74) de raccordement sur les premières surfaces (20) arrière des premiers évasements (16) du premier bout (12) de ligne par un mouvement de rotation relatif entre l'anneau (74) de raccordement et le premier bout (12) de ligne ;
- faire passer le deuxième évasement (22) du deuxième bout (14) de ligne dans les parties (80) de passage de l'anneau (74) de raccordement ; et
- mettre en application les deuxièmes surfaces (78) de fermeture de l'anneau (74) de raccordement sur les deuxièmes surfaces (26) arrière des deuxièmes évasements (22) du deuxième bout (14) de ligne par un mouvement de rotation relatif entre l'anneau (74) de raccordement et le deuxième bout (14) de ligne.

8. Agencement (85) de raccordement comprenant un dispositif de raccordement suivant l'une des revendications 1 à 5, dans lequel le premier bout (12) de ligne et le deuxième bout (14) de ligne sont raccordés l'un à l'autre par l'anneau (74) de raccordement.

9. Dispositif (10) de raccordement suivant l'une des revendications 1 à 5 ou agencement (85) de raccordement suivant la revendication 8, **caractérisé en ce que** le premier bout (12) de ligne et/ou le deuxième bout (14) de ligne est fabriqué en une matière plastique thermoplastique.
